# EUROPÄISCHE PATENTSCHRIFT

(11) **EP 1 466 773 B1**
(45) Veröffentlichungstag und Bekanntmachung des Hinweises auf die Patenterteilung: **16.01.2013**
(21) Anmeldenummer: 04101458.0
(22) Anmeldetag: 08.04.2004
(51) Int. Cl.: B60K 6/365, B60K 6/44, B60K 6/445, B60K 6/52

(54) **Antriebsvorrichtung zum Antreiben von Zusatzgeräten für ein Fahrzeug**
Driving device for driving additional apparatus in a vehicle
Dispositif d'entrainement pour équipements auxiliaires

(30) Priorität: 08.04.2003 DE 10315937
(43) Veröffentlichungstag der Anmeldung: 13.10.2004
(73) Patentinhaber: DEERE & COMPANY, Moline, Illinois 61265-8098 (US)
(72) Erfinder: Tarasinski, Nicolai, 67227, Frankenthal (DE)
(74) Vertreter: Holst, Sönke

(56) Entgegenhaltungen:
- EP-A- 1 205 338
- EP-A- 1 215 418
- EP-A- 1 314 884
- EP-A- 1 338 458
- DE-A1- 19 749 074
- FR-A- 2 824 509
- US-A- 6 052 978

## Beschreibung

Die Erfindung betrifft eine Antriebsvorrichtung zum Antreiben von Zusatzgeräten für ein Fahrzeug, insbesondere ein landwirtschaftliches oder industrielles Nutzfahrzeug, mit einem Mischgetriebe, wobei eine erste Getriebeschnittstelle des Mischgetriebes von einem Verbrennungsmotor antreibbar ist und eine elektrische Maschine mit einer zweiten Getriebeschnittstelle des Mischgetriebes in Verbindung steht.

Weiterhin betrifft die vorliegende Erfindung ein Fahrzeug mit einer solchen Antriebsvorrichtung.

Aus der DE 197 49 074 A1 ist ein landwirtschaftliches Nutzfahrzeug mit einem mechanisch-elektrischen leistungsverzweigten Getriebe bekannt. Hierbei ist ein Verbrennungsmotor mit einer ersten Getriebeschnittstelle eines Mischgetriebes und eine elektrische Maschine mit einer weiteren Getriebeschnittstelle des Mischgetriebes verbunden. Das Mischgetriebe dient zum Fahrantrieb des Nutzfahrzeugs. Es ist ein von der Motorantriebswelle angetriebener Generator vorgesehen, der die elektrische Maschine mit elektrischer Leistung versorgt. Somit kann eine mechanisch-elektrische Leistungsverzweigung realisiert werden, die einen stufenlos ansteuerbaren Fahrantrieb des Nutzfahrzeugs ermöglicht, wobei ein höherer Wirkungsgrad gegenüber einem herkömmlichen hydrostatisch ausgeführten leistungsverzweigten Getriebe erzielbar ist. Die Zapfwelle hingegen ist über ein rein mechanisches Getriebe mit dem Verbrennungsmotor verbunden, so dass die Zapfwellendrehzahl in einem festen Drehzahlverhältnis zur Drehzahl des Verbrennungsmotors steht.

Unter einer Zapfwelle im Sinn der hier vorliegenden Erfindung ist eine Antriebsschnittstelle für ein von dem Fahrzeug angetriebenes Zusatzgerät zu verstehen, die ein mechanisches Drehmoment zur Verfügung stellt.

Des Weiteren ist aus der US 6 052 978 A eine Antriebsvorrichtung für eine Landmaschine in Gestalt eines Feldhäckslers bekannt. Gemäß einem ersten Ausführungsbeispiel umfasst die Antriebsvorrichtung ein Getriebe, einen Antrieb, einen hydraulisch oder elektrisch angetriebenen Motor und einen Abtrieb. Das Getriebe ist als Planetengetriebe ausgebildet, wobei das Planetengetriebe ein Sonnenrad, einen Planetenradträger mit zugehörigen Planetenrädern und ein Ringrad umfasst. Der mit dem Verbrennungsmotor des Feldhäckslers in Verbindung stehende Antrieb versetzt das Sonnenrad in Drehung. Die Planetenräder rollen auf dem Sonnenrad ab und versetzen den mit dem Abtrieb verbundenen Planetenträger ihrerseits in Drehung. Der hydraulisch betriebene Motor dient dem variablen Antrieb des Ringrads, wobei sich je nach dessen Drehzahl das Übersetzungsverhältnis des Getriebes stufenlos verstellen lässt.

Die EP 1 293 697 A2 offenbart ferner ein zweistufiges Zapfwellengetriebe zum Betreiben einer Zapfwelle, an der ein Anbaugerät eines Traktors anschließbar ist. Das Zapfwellengetriebe weist eine Eingangsstufe auf, die seitens eines Verbrennungsmotors des Traktors antreibbar ist und die mit einer hydraulischen Bremse verbunden ist, durch die sich eine unerwünschte Drehung der Zapfwelle durch Stillsetzen des gesamten Zapfwellenantriebsstrangs blockieren lässt. Dies ist insbesondere zum sicheren An- und Abkoppeln von Anbaugeräten erforderlich. Die Bremse ist dementsprechend zwischen einer Zapfwellenkupplung und dem Zapfwellengetriebe angeordnet, wobei eine synchrone hydraulische Ansteuerung von Bremse und Zapfwellenkupplung derart erfolgt, dass die Bremse beim Schließen der Zapfwellenkupplung geöffnet wird und umgekehrt. Die EP 1 205 338 A offenbart eine Antriebsvorrichtung nach dem Überbegrift des Anspruchs 1.

Die der Erfindung zugrunde liegende Aufgabe wird darin gesehen, eine Antriebsvorrichtung zum Antreiben von Zusatzgeräten für ein Fahrzeug der eingangs genannten Art anzugeben, mittels derer elektrischer Strom erzeugbar ist, der elektrischen Verbrauchern zur Verfügung gestellt werden kann.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Antriebsvorrichtung der eingangs genannten Art dadurch gekennzeichnet, dass eine Bremse vorgesehen ist, mit der die Zapfwelle stillsetzbar ist, sodass bei stillgesetzter Zapfwelle das vom Verbrennungsmotor an die Getriebeschnittstelle abgegebene Drehmoment über das Mischgetriebe auf die elektrische Maschine übertragen wird, die dann als Generator betrieben wird und elektrischen Strom erzeugt.

Falls das Mischgetriebe von einem Verbrennungsmotor über die Getriebeschnittstelle angetrieben wird und die Zapfwelle mit der Bremse stillgesetzt ist, wird die gesamte in das Mischgetriebe eingeleitete mechanische Energie der elektrischen Maschine zugeführt. Hierdurch kann in vorteilhafter Weise mit der elektrischen Maschine elektrische Energie erzeugt werden, die beispielsweise elektrischen Verbrauchern oder einer Batterie zugeführt werden kann. Insoweit handelt es sich hierbei nicht um eine von einem Verbrennungsmotor im Dauerbetrieb angetriebene elektrische Maschine, beispielsweise in Form einer herkömmlichen Lichtmaschine eines Fahrzeugs, sondern um eine elektrische Maschine, die nach Bedarf durch das Stillsetzten der Bremse der Zapfwelle in Zusammenwirken mit dem Mischgetriebe aktiviert werden kann. Da eine Zapfwelle üblicherweise zur Übertragung hoher Drehmomente ausgelegt ist, kann in besonders vorteilhafter Weise mit der elektrischen Maschine bei entsprechender Dimensionierung auch eine entsprechend hohe elektrische Leistung erzeugt werden. Falls die Zapfwelle mit der Bremse stillgesetzt wird und somit die Getriebeschnittstelle der Zapfwelle stillgesetzt ist, wirkt die mit der elektrischen Maschine verbundene Getriebeschnittstelle als Ausgang.

Entsprechend einer bevorzugten Ausgestaltung der Erfindung weist das Mischgetriebe ein Umlaufgetriebe, insbesondere ein Planetengetriebe auf. Das Planetengetriebe ist vorzugsweise derart ausgelegt, dass sowohl der Verbrennungsmotor als auch die elektrische Maschine in einem wirkungsgradgünstigen Bereich arbeiten, wobei auch hohe Drehmomente an die Zapfwelle übertragbar sein sollen. Hierbei ist vorzugsweise eine als Eingang wirkende Getriebeschnittstelle des Planetengetriebes mit dem Verbrennungsmotor verbunden. Eine sowohl als Eingang als auch als Ausgang wirkende Getriebeschnittstelle des Planetengetriebes ist mit der elektrischen Maschine verbunden. Schließlich ist eine als Ausgang wirkende Getriebeschnittstelle des Planetengetriebes mit der Zapfwelle verbunden.

In einer besonders bevorzugten Ausführungsform ist eine weitere elektrische Maschine vorgesehen, die mittelbar oder unmittelbar vom Verbrennungsmotor antreibbar ist. Die weitere elektrische Maschine könnte über eine formschlüssige Getriebeverbindung mit der Antriebswelle des Verbrennungsmotors verbunden sein. Eine unmittelbare Anordnung der elektrischen Maschine auf der Antriebswelle, wie beispielsweise bei der DE 197 49 074 A1 beschrieben, könnte ebenfalls vorgesehen sein. Insoweit ist die weitere elektrische Maschine wie auch die elektrische Maschine aufgrund des mittelbaren oder unmittelbaren mechanischen Antriebs durch den Verbrennungsmotor in vorteilhafter Weise mit einem hohen Drehmoment antreibbar, so dass beispielsweise auch elektrische Verbraucher mit hoher Leistung betreibbar sind.

Insbesondere zum Betrieb von elektrischen Verbrauchern, die eine hohe elektrische Leistung benötigen, ist die elektrische Maschine und/oder die weitere elektrische Maschine als Generator betreibbar. Hierzu ist letztendlich die elektrische Maschine bzw. die weitere elektrische Maschine entsprechend elektrisch zu verschalten, so dass beispielsweise der von beiden elektrischen Maschinen generierte Drehstrom direkt elektrischen Verbrauchern in Form von z.B. Drehstrommotoren zugeführt werden kann. Wenn eine besonders hohe elektrische Leistung benötigt wird, kann die Zapfwelle durch die Bremse stillgesetzt werden, wodurch die elektrische Maschine mit maximaler Drehzahl angetrieben wird. Die weitere elektrische Maschine wird mittelbar oder unmittelbar vom Verbrennungsmotor angetrieben und beide elektrische Maschinen sind als Generator betreibbar.

Die elektrische Maschine oder die weitere elektrische Maschine könnte auch als Elektromotor betreibbar sein. Vorzugsweise arbeitet die elektrische Maschine als Elektromotor. In diesem Fall speist sowohl die elektrische Maschine als auch der Verbrennungsmotor Leistung ins Mischgetriebe ein, welches die gemischte Leistung über die Zapfwelle abgibt. Hierbei kann die elektrische Maschine in zwei Drehmomentrichtungen betrieben werden, wodurch in vorteilhafter Weise die Drehzahl der Zapfwelle über einen großen Drehzahlbereich variiert werden kann. So ist ein stufenlos ansteuerbarer Zapfwellenbetrieb mit dem mechanisch-elektrisch leistungsverzweigten Getriebe möglich. Aber auch die weitere elektrische Maschine kann als Elektromotor betrieben werden, um beispielsweise die von ihr erzeugte Energie mechanisch rückzukoppeln.

Vorzugsweise ist der elektrischen Maschine und/oder der weiteren elektrischen Maschine jeweils ein Umrichter zugeordnet, mit dem die jeweilige elektrische Maschine in beide Drehrichtungen und/oder Drehmomentrichtungen schaltbar ist (Vier-Quadranten-Betrieb). Der Umrichter wandelt vorzugsweise den von der als Generator arbeitenden elektrischen Maschine erzeugten Wechselstrom in Gleichstrom um und speist ihn in ein Gleichstromnetz oder in eine elektrische Speichereinheit. Falls eine elektrische Maschine als Elektromotor zu betreiben ist, wandelt der Umrichter den aus dem Gleichstromnetz bzw. aus der elektrischen Speichereinheit entnommenen Gleichstrom in Wechsel- oder Drehstrom um, wodurch die elektrische Maschine als Wechsel- oder Drehstrommotor betreibbar ist.

Die Antriebsvorrichtung ist insbesondere dann vielseitig und variabel einsetzbar, wenn eine Steuerung vorgesehen ist, die den Verbrennungsmotor oder eine Steuerung des Verbrennungsmotors, die elektrische Maschine, die weitere elektrische Maschine, mindestens einen Umrichter und/oder die Bremse ansteuert. Diese Steuerung kann beispielsweise die Antriebsvorrichtung durch das Öffnen der Bremse und durch eine Konfiguration der Umrichter der elektrischen Maschine zum Elektromotor und der weiteren elektrischen Maschine zum Generator derart konfigurieren, dass ein leistungsverzweigtes mechanisch-elektrisches Getriebe realisiert ist. Hierbei wird ein Teil des vom Verbrennungsmotor erzeugten Drehmoments und ein anderer Teil des von der elektrischen Maschine erzeugten Drehmoments über das Mischgetriebe auf die Zapfwelle übertragen. Somit kann in ganz besonders vorteilhafter Weise eine im Wesentlichen konstante Zapfwellendrehzahl bei einer variierenden Drehzahl des Verbrennungsmotors bereitgestellt werden. Weiterhin kann eine variable Zapfwellendrehzahl bei einer im Wesentlichen konstanten Verbrennungsmotordrehzahl erzeugt werden.

Somit sind mit der erfindungsgemäßen Antriebsvorrichtung in ganz besonders vorteilhafter Weise zwei grundsätzlich unterschiedliche Arten von an einen Traktor adaptierbaren Arbeitsgeräten betreibbar: zum Einen sind dies Arbeitsgeräte, die eine konstante Eingangsdrehzahl erfordern, beispielsweise Mähwerke oder nicht selbstfahrende Rundballenpressen. Zum Andern sind dies Arbeitsgeräte, die eine Eingangsdrehzahl erfordern, die in Abhängigkeit der Traktorgeschwindigkeit oder des zurückgelegten Wegs variiert. Beispiele für letztere sind Sämaschinen.

Im Hinblick auf eine effiziente Ansteuerung der erfindungsgemäßen Antriebsvorrichtung sind die Zustandsdaten des Verbrennungsmotors, der Zapfwelle, der elektrischen Maschine und/oder der weiteren elektrischen Maschine von der Steuerung erfassbar. Die Zustandsdaten werden vorzugsweise über Sensoren erfasst. Die Zustandsdaten des Verbrennungsmotors sind im Allgemeinen einer Steuereinrichtung des Verbrennungsmotors bekannt und müssten demnach lediglich der Steuerung der Antriebsvorrichtung zugeleitet werden. Die Zustandsdaten der Zapfwelle können mittels eines an der Zapfwelle angeordneten Drehzahlsensors detektiert und der Steuerung zugeführt werden. Die Zustandsdaten der elektrischen Maschinen können über eine Strom- bzw. Spannungsmessung ermittelt und der Steuerung zugeführt werden. Zusammen mit den Sensoren und der Steuerung kann somit ein Regelkreis zum Einstellen der Zapfwellendrehzahl realisiert werden.

Ganz allgemein kann bei geöffneter Bremse die elektrische Maschine, die weitere elektrische Maschine und das Mischgetriebe zu einem leistungsverzweigten stufenlosen Getriebe für die Zapfwelle kombiniert werden. Hierbei kann - wie bereits angedeutet - die weitere elektrische Maschine als Generator und die elektrische Maschine als Elektromotor betrieben werden. Alternativ kann auch die elektrische Maschine als Generator und die weitere elektrische Maschine als Elektromotor betrieben werden, wobei in diesem Fall eine mechanische Rückkopplung über die elektrische Leistung der elektrischen Maschine erfolgt.

Nun kann einerseits eine geforderte konstante Drehzahl der Zapfwelle aufgrund der erfindungsgemäßen Antriebsvorrichtung auch bei einem mit variabler Drehzahl betriebenen Verbrennungsmotor bereitgestellt werden. Andererseits kann mit der erfindungsgemäßen Antriebsvorrichtung auch bei konstanter Drehzahl des Verbrennungsmotors eine variable Drehzahl der Zapfwelle bereitgestellt werden. Daher ist es denkbar, dass die Steuerung die elektrische Maschine und gegebenenfalls die weitere elektrische Maschine derart ansteuert, dass ein in der Steuerung hinterlegtes vorgebbares Optimierungsziel erreichbar ist. Ein solches Optimierungsziel könnte beispielsweise der niedrigste Kraftstoffverbrauch des Verbrennungsmotors oder die geringst mögliche Geräuschentwicklung sein.

Ein an die Zapfwelle angeschlossenes Arbeitsgerät kann nun aufgrund von sich verändernden Arbeitsbedingungen kurzzeitig Drehmomentspitzen erzeugen und Drehschwingungen bewirken, die von der Zapfwelle über das Mischgetriebe auf den Verbrennungsmotor übertragen werden. Dies resultiert in ruckartigen oder periodischen Belastungen des Verbrennungsmotors, die den Fahrkomfort beeinträchtigen. Zur Vermeidung von einer Übertragung von Drehschwingungen über die Zapfwelle werden in einer besonders bevorzugten Ausführungsform die Steuerung, die elektrische Maschine und/oder gegebenenfalls die weitere elektrische Maschine derart angesteuert, dass Drehschwingungen in einem Zapfwellenstrang dämpfbar sind. Unter dem Zapfwellenstrang sind in diesem Zusammenhang insbesondere die Komponenten zu verstehen, die zwischen der Zapfwelle und dem Verbrennungsmotor angeordnet sind, also z.B. das Mischgetriebe, die elektrische Maschine und die weitere elektrische Maschine. Aufgrund dieser Steuerung nimmt die elektrische und/oder die weitere elektrische Maschine Drehschwingungen auf bzw. dämpft diese, wodurch eine Übertragung der Drehschwingungen auf den Verbrennungsmotor weitgehend vermieden wird.

Im Konkreten könnte die Übersetzung des Mischgetriebes derart ausgelegt sein, dass die im Hauptarbeitsbereich der Zapfwelle benötigten Drehzahlen im wirkungsgradoptimalen Drehzahlbereich des Verbrennungsmotors liegen. Vorzugsweise könnte die Übersetzung des Mischgetriebes auch derart ausgelegt sein, dass ein minimaler Leistungsanteil der elektrischen und/oder der weiteren elektrischen Maschine bereitzustellen ist. Hierdurch können in vorteilhafter Weise die elektrischen Verluste minimiert werden und das Gesamtsystem kann wirkungsgradoptimiert betrieben werden.

Eine Bestimmung des Drehmoments der Zapfwelle ist mit der erfindungsgemäßen Antriebsvorrichtung in besonders vorteilhafter Weise ohne zusätzlichen konstruktiven Aufwand dadurch möglich, dass die Bestimmung anhand des von der elektrischen Maschine erzeugten Drehmoments erfolgt. Da die Eigenschaften des Mischgetriebes - insbesondere dessen Übersetzungsverhältnis - bekannt sind und das auf die elektrische Maschine übertragene Drehmoment - z.B. durch eine Strommessung - einfach bestimmbar ist, kann unmittelbar das auf die Zapfwelle übertragene Drehmoment bestimmt werden. Die Bestimmung des Drehmomentes der Zapfwelle ist unabhängig davon möglich, ob die elektrische Maschine als Generator oder als Motor arbeitet.

In einer bevorzugten Ausführungsform sind die elektrische Maschine und die weitere elektrische Maschine räumlich nah beieinander angeordnet. Hierdurch kann in vorteilhafter Weise eine kompakte und raumsparende Bauform erzielt werden und die elektrische Verkabelung kann kurze Leitungen umfassen. Vorzugsweise sind beide elektrische Maschinen von einer gemeinsamen Kühleinrichtung kühlbar. Hierdurch ist lediglich ein entsprechend ausgestalteter Kühlkörper vorzusehen, der die beiden nah beieinander angeordneten elektrischen Maschinen kühlt. Somit kann in vorteilhafter Weise neben einer kompakten Bauweise auch ein separater Kühlkörper für die zweite elektrische Maschine entfallen. Hierbei müssen die Kühlleitungen dann nur zu diesem Kühlkörper geführt werden, was ein Gesamtsystem weiter vereinfacht und dessen Kosten reduziert.

Nun können die elektrische Maschine und/oder die weitere elektrische Maschine jeweils als Generator arbeiten und einen elektrischen Verbraucher versorgen. So kann beispielsweise ein elektrischer Heizwiderstand betrieben werden, der einen Kühlkreislauf des Verbrennungsmotors aufheizt, wodurch beispielsweise der Kühlkreislauf des Verbrennungsmotors kurz nach dessen Start schneller auf seine Betriebstemperatur gebracht werden kann. Weiterhin könnte ein an eine elektrische Schnittstelle anschließbarer elektrischer Verbraucher gespeist werden. Die elektrische Schnittstelle könnte beispielsweise eine Steckdose umfassen, die 220 Volt Wechselspannung bereitstellt.

Die erfindungsgemäße Antriebsvorrichtung nach einem der Patentansprüche 1 bis 18 könnte in einer besonders bevorzugten Ausführungsform in ein Fahrzeug implementiert sein, insbesondere in ein landwirtschaftliches oder in ein industrielles Nutzfahrzeug.

Bei einem solchen Fahrzeug könnte eine Drehzahlregelung der Zapfwelle vorgesehen sein, die abhängig von der Fahrzeuggeschwindigkeit ist. Eine solche "Wegzapfwelle" ist insbesondere bei Traktoren für die Adaption von Arbeitsgeräten vorgesehen, die eine von der Fahrzeuggeschwindigkeit abhängige Eingangsdrehzahl erfordern, beispielsweise eine Sämaschine.

In einer bevorzugten Ausführungsform sind die elektrische Maschine und/oder die weitere elektrische Maschine zur Bremsung des Fahrzeugs, insbesondere zur Dauerbremsung, konfigurierbar. So könnte beispielsweise die von beiden elektrischen Maschinen erzeugte elektrische Leistung einem elektrischen Heizwiderstand zugeführt werden. Insbesondere bei längeren Gefällefahrten kann somit eine verschleißfreie Dauerbremsung für das Fahrzeug bereitgestellt werden, die letztendlich die Sicherheit und die Zuverlässigkeit des Fahrzeugs verbessert.

In einer ganz besonders bevorzugten Ausführungsform weist das Fahrzeug mindestens ein durch einen Elektromotor angetriebenes Fahrzeugrad auf, und die von einer im Generatorbetrieb arbeitenden elektrischen Maschine erzeugte elektrische Energie speist den Elektromotor des Fahrzeugrads. Beispielsweise könnten die Räder der Fahrzeugvorderachse elektrisch angetrieben werden, wobei die Räder der Hinterachse - gegebenenfalls über ein zwischengeschaltetes Getriebe - vom Verbrennungsmotor angetrieben werden. Hierbei sind in ganz besonders vorteilhafter Weise die elektrisch angetriebenen Räder der Fahrzeugvorderachse in ihrer Drehzahl stufenlos ansteuerbar, vorausgesetzt, dass genügend elektrische Energie zur Verfügung steht.

Grundsätzlich könnte während des reinen Fahrbetriebs des Fahrzeugs die Zapfwelle mit der Bremse stillgesetzt sein. Dies ist insbesondere dann der Fall, wenn kein Arbeitsgerät an das beispielsweise als Traktor ausgeführte Fahrzeug adaptiert ist und somit ein Zapfwellenbetrieb nicht benötigt wird. Bei stillgesetzter Bremse wird die vom Verbrennungsmotor in das Mischgetriebe eingespeiste mechanische Energie nahezu verlustfrei mittels der als Generator betreibbaren elektrischen Maschine in elektrische Energie umgewandelt.

In einer ganz besonders bevorzugten Ausführungsform weist das Mischgetriebe ein Plusgetriebe auf. Dieses Plusgetriebe könnte zwei Sonnenräder und mehrere in einem Planetenträger umlaufende Stufenplanetenräder aufweisen. Unter Stufenplanetenräder sind zwei drehfest miteinander verbundene Zahnräder gemeint. Im Konkreten ist die elektrische Maschine mit der in Form eines Sonnenrads ausgeführten zweiten Getriebeschnittstelle des Mischgetriebes verbunden. Der Verbrennungsmotor ist insbesondere über einen Steg mit der Getriebeschnittstelle, welche einen Planetenträger des Mischgetriebes aufweisen könnte, verbindbar. Die Zapfwelle steht mit der in Form eines zweiten Sonnenrads ausgeführten dritten Getriebeschnittstelle in Verbindung.

Zum Erzielen einer kompakten Bauform der Antriebsvorrichtung ist bevorzugt die elektrische Maschine im Inneren in Form eines Hohlläufers ausgebildet. Das Mischgetriebe ist zumindest teilweise in der elektrischen Maschine angeordnet. Ganz besonders bevorzugt weist die elektrische Maschine eine Asynchronmaschine auf.

Eine Schmierung des Mischgetriebes sowie eine Kühlung der elektrischen Maschine könnte bei einer baulichen Anordnungen des Mischgetriebes in der elektrischen Maschine einfach und effizient dadurch erzielt, dass Kühlmittel zunächst dem Mischgetriebe zur Schmierung zugeführt wird. Bei dem Kühlmittel könnte es sich beispielsweise um Getriebeöl handeln. Das Kühlmittel gelangt sodann aufgrund der Zentrifugalkraft der sich im Mischgetriebe drehenden Komponenten in den Innenraum des Rotors der elektrischen Maschine. Der Rotor der elektrischen Maschine und das Mischgetriebe befinden sich hierbei in einem Gehäuseabschnitt. Vorzugsweise sind an dem Innenraum des Rotors der elektrischen Maschine Mittel vorgesehen, welche insbesondere seitlich angeordnete Scheiben aufweisen, und welche ein Abfließen des Kühlmittels in axialer Richtung zumindest weitgehend verhindern. Unter axialer Richtung ist in diesem Zusammenhang die Richtung der Drehachse des Rotors zu verstehen. Mit anderen Worten bildet sich bei der Rotation des Rotors der elektrischen Maschine aufgrund der Zentrifugalkraft ein rotierender Kühlmittelring. Zur ganz besonders effizienten Kühlung des Rotors der elektrischen Maschine fließt das nach außen geschleuderte Kühlmittel durch Durchgänge nach außen, welche sich im Wesentlichen in radialer Richtung des Rotors erstrecken. Die Durchgänge könnten beispielsweise Schlitze und/oder Bohrungen in den beiden Kurzschlussringen des Rotors aufweisen. Der Stator der elektrischen Maschine und insbesondere dessen Wickelköpfe können ebenfalls mit dem Kühlmittel gekühlt werden.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung eines ersten Ausführungsbeispiels der vorliegenden Erfindung,
- Fig. 2: die schematische Darstellung eines zweiten Ausführungsbeispiels der vorliegenden Erfindung,
- Fig. 3: die schematische Darstellung eines Ausführungsbeispiels eines Mischgetriebes gemäß der vorliegenden Erfindung,
- Fig. 4: eine schematische Darstellung einer Weiterbildung des ersten Ausführungsbeispiels der vorliegenden Erfindung,
- Fig. 5: eine schematische Darstellung einer Weiterbildung des Ausführungsbeispiels aus Fig. 4 der vorliegenden Erfindung und
- Fig. 6: eine schematische Darstellung einer Alternative des Ausführungsbeispiels aus Fig. 5 der vorliegenden Erfindung.

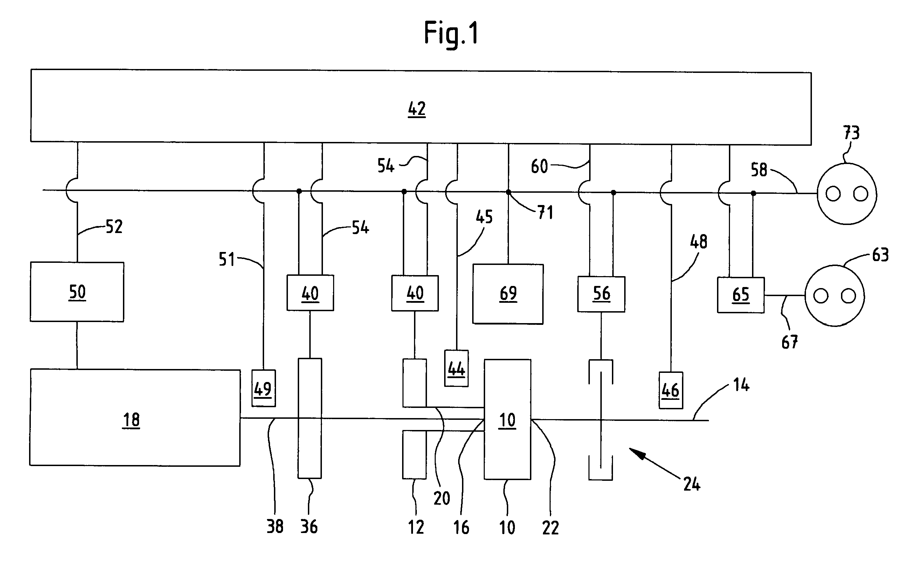

Fig. 1 zeigt eine Antriebsvorrichtung zum Antreiben von Zusatzgeräten für ein Fahrzeug. Ein solches Fahrzeug kann beispielsweise ein landwirtschaftliches oder industrielles Nutzfahrzeug sein, vorzugsweise könnte es sich um einen Traktor handeln. Ein Verbrennungsmotor 18 ist über eine Antriebswelle 38 mit einem Mischgetriebe 10 verbunden. Das Mischgetriebe 10 ist mit einer Zapfwelle 14 verbunden, mit der Zusatzgeräte für das Fahrzeug angetrieben werden können. Eine elektrische Maschine 12 ist ebenfalls mit dem Mischgetriebe 10 verbunden. Somit umfasst die Antriebsvorrichtung zumindest ein Mischgetriebe 10, eine elektrische Maschine 12 und eine Zapfwelle 14.

Eine Getriebeschnittstelle 16 des Mischgetriebes 10 wird von dem Verbrennungsmotor 18, insbesondere einem Dieselmotor, angetrieben. Die elektrische Maschine 12 ist mit einer zweiten Getriebeschnittstelle 20 des Mischgetriebes 10 verbunden. Die Zapfwelle 14 steht mit einer dritten Getriebeschnittstelle 22 des Mischgetriebes 10 in Verbindung. Durch diese Anordnung kann die Zapfwellendrehzahl unabhängig von der Drehzahl des Verbrennungsmotors 18 angesteuert werden, indem die elektrische Maschine 12 beispielsweise als Elektromotor betrieben wird und das von ihr erzeugte Drehmoment auf das Mischgetriebe 10 überträgt.

Es ist eine Bremse 24 vorgesehen, mit der die Zapfwelle 14 stillsetzbar ist. Bei stillgesetzter Zapfwelle 14 wird das vom Verbrennungsmotor 18 an die Getriebeschnittstelle 16 abgegebene Drehmoment über das Mischgetriebe 10 auf die elektrische Maschine 12 übertragen, die dann ihrerseits als Generator betrieben wird und elektrischen Strom erzeugt. Insoweit kann durch entsprechende Beschaltung der elektrischen Maschine 12 und durch eine einfache Maßnahme, nämlich das Stillsetzen der Bremse, elektrischer Strom erzeugt werden, der elektrischen Verbrauchern zur Verfügung gestellt werden kann.

Es ist eine weitere elektrische Maschine 36 vorgesehen, die unmittelbar vom Verbrennungsmotor 18 über die Welle 38 angetrieben wird. Die weitere elektrische Maschine 36 hat vorzugsweise eine Nennleistung von ca. 20 kW. Die Nennleistung der elektrischen Maschine 12 beträgt vorzugsweise ca. 30 kW, die des Verbrennungsmotors 18 vorzugsweise ca. 100 kW.

Sowohl die elektrische Maschine 12 als auch die weitere elektrische Maschine 36 ist als Generator betreibbar. Weiterhin ist die elektrische Maschine 12 oder die weitere elektrische Maschine 36 als Elektromotor betreibbar.

Der elektrischen Maschine 12 und der weiteren elektrischen Maschine 36 ist jeweils ein Umrichter 40 zugeordnet, mit dem die jeweilige elektrische Maschine 12, 36 in beide Drehrichtungen und/oder Drehmomentrichtungen schaltbar ist, so dass ein Vier-Quadranten-Betrieb der elektrischen Maschinen 12, 36 möglich ist.

Es ist eine Steuerung 42 vorgesehen, die den Verbrennungsmotor 18, die elektrische Maschine 12, die weitere elektrische Maschine 36, die Umrichter 40 und die Bremse 24 ansteuert. Die Steuerung 42 kann über ein Bussystem des Fahrzeugs mit den einzelnen Komponenten verbunden sein, was durch die längliche Form der Steuerung 42 in Fig. 1 angedeutet ist.

Die Zustandsdaten des Verbrennungsmotors 18, der Zapfwelle 14, der elektrischen Maschine 12 und der weiteren elektrischen Maschine 36 sind von der Steuerung 42 erfassbar. Hierzu ist beispielsweise ein Drehzahlsensor 46 an der Zapfwelle 14 vorgesehen, der ein Drehzahlsignal erzeugt und der Steuerung 42 über die Verbindungsleitung 48 zuleitet. Die Zustandsdaten des Verbrennungsmotors 18 sind der Steuerung 50 des Verbrennungsmotors 18 bekannt und werden der Steuerung 42 über die Verbindungsleitung 52 zugeführt. Weiterhin ist ein Drehzahlsensor 49 vorgesehen, der die Drehzahl der Motorausgangswelle 38 detektiert, ein Drehzahlsignal erzeugt und dieses der Steuerung 42 über die Verbindungsleitung 51 zuleitet. Die Zustandsdaten der beiden elektrischen Maschinen 12, 36 sind der Steuerung 42 aufgrund der von den Umrichtern 40 erzeugten elektrischen Zustandsgrößen bekannt, die über die Verbindungsleitungen 54 mit der Steuerung 42 verbunden sind. Zusätzlich ist ein Drehzahlsensor 44 vorgesehen, der die Drehzahl und die Drehrichtung der zweiten Getriebeschnittstelle 20 und somit die Drehzahl und Drehrichtung der elektrischen Maschine 12 detektiert und der Steuerung 42 meldet. Der Drehzahlsensor 44 ist über die Verbindungsleitung 45 mit der Steuerung 42 verbunden.

Im Zapfwellenbetrieb, also bei geöffneter Bremse 24, sind die elektrische Maschine 12, die weitere elektrische Maschine 36 und das Mischgetriebe 10 zu einem leistungsverzweigten stufenlosen Getriebe für die Zapfwelle 14 kombinierbar. Hierbei wird vorzugsweise die weitere elektrische Maschine 36 als Generator und die elektrische Maschine 12 als Elektromotor betrieben.

Die Bremse 24 wird von einem elektrischen Ansteuerelement 56 betrieben. Die Stromversorgung hierzu erhält das Ansteuerelement 56 über ein Gleichstromnetz 58, in das auch die elektrischen Maschinen 12, 36 ihre erzeugte elektrische Energie einspeisen oder aus dem die elektrischen Maschinen 12, 36 mit elektrischer Energie versorgt werden, je nach dem, ob sie als Generator und/oder als Elektromotor betrieben werden. Das elektrische Ansteuerelement 56 wird über die Verbindungsleitung 60 von der Steuerung 42 angesteuert.

Die elektrische Maschine 12 kann als Generator arbeiten und hierbei einen elektrischen Verbraucher versorgen, beispielsweise einen an eine elektrische Schnittstelle 63 anschließbaren, nicht gezeigten elektrischen Verbraucher. Die Schnittstelle 63 könnte beispielsweise in Form einer Steckdose ausgeführt sein. Die Schnittstelle 63 wird von einer Steuerung 65 über die Verbindungsleitung 67 elektrisch versorgt. Diese Schnittstelle stellt dem Versorger Wechselspannung zu Verfügung, die von einem der Steuerung 65 zugeordneten - nicht getrennt eingezeichneten - Umrichter aus dem über das Gleichstromnetz 58 bezogenen Gleichstrom erzeugt wird. Ebenso ist ein Verbraucher an die in Form einer Steckdose ausgeführte Schnittstelle 73 anschließbar, die dem Verbraucher Gleichstrom direkt aus dem Gleichstromnetz 58 zur Verfügung stellt. Alternativ kann die von der elektrischen Maschine 12 erzeugte elektrische Energie einem Bremswiderstand 69 zugeführt werden, der diese in Wärme umwandelt. Hierzu wird ein Schalter 71 von der Steuerung 42 geschaltet, um den Bremswiderstand 69 mit dem Gleichstromnetz 58 zu verbinden.

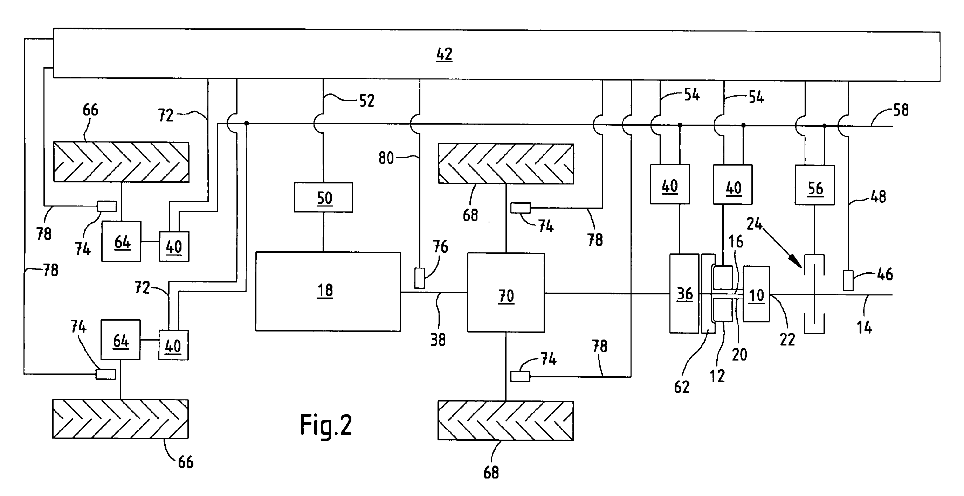

Das in Fig. 2 gezeigte Ausführungsbeispiel zeigt eine erfindungsgemäße Antriebsvorrichtung, die in ein landwirtschaftliches Nutzfahrzeug eingebaut ist. In den Figuren 1 und 2 werden gleichartige Komponenten mit den selben Bezugszeichen belegt.

Das Fahrzeug weist zwei durch jeweils einen Elektromotor 64 angetriebene Fahrzeugräder 66 auf. Bei den Fahrzeugrädern 66 handelt es sich um Fahrzeugräder einer Vorderachse des Fahrzeugs. Die für die beiden Elektromotoren 64 erforderliche elektrische Energie wird entweder von der elektrischen Maschine 12 oder von der weiteren elektrischen Maschine 36 erzeugt und über das Gleichstromnetz 58 über die Umrichter 40 den Elektromotoren 64 zur Verfügung gestellt. Die den Elektromotoren 64 zugeordneten Umrichter 40 sind über die Verbindungsleitungen 72 mit der Steuerung 42 verbunden. Anstelle der beiden Elektromotoren 64 kann auch ein einziger Elektromotor vorgesehen sein, der die beiden Fahrzeugräder der Vorderachse antreibt. Weiterhin sind Fahrzeugräder 68 einer Hinterachse des Fahrzeugs vorgesehen, die über ein Getriebe 70 mit dem Verbrennungsmotor verbunden sind.

Neben dem Drehzahlsensor 46 für die Zapfwelle 14 sind vier weitere Drehzahlsensoren 74 vorgesehen, die jeweils die Drehzahlen der Fahrzeugräder 66 bzw. 68 detektieren. Ein Drehzahlsensor 76 detektiert die Drehzahl der Motorausgangswelle 38 und somit die Drehzahl des Verbrennungsmotors 18. Die Verbindungsleitungen 78 bzw. 80 verbinden die Drehzahlsensoren 74 bzw. 76 mit der Steuerung 42.

In Fig. 2 sind die elektrische Maschine 12 und die weitere elektrische Maschine 36 räumlich nah beieinander angeordnet. Hierdurch können beide elektrische Maschinen 12, 36 von einer einzigen - lediglich schematisch angedeuteten - Kühleinrichtung 62 gekühlt werden.

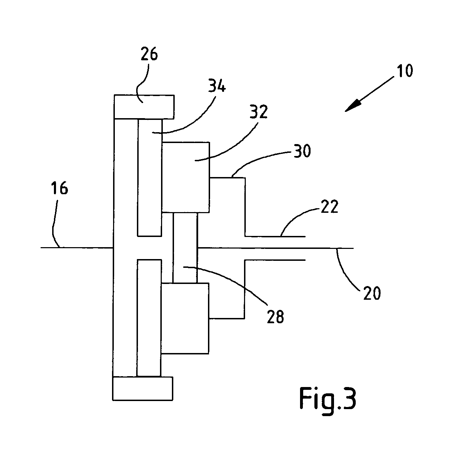

Fig. 3 zeigt ein Ausführungsbeispiel eines Mischgetriebes 10 der vorliegenden Erfindung. Das Mischgetriebe 10 ist als Planetengetriebe ausgeführt. Das Planetengetriebe umfasst ein Hohlrad 26, das über die Getriebeschnittstelle 16 vom - in Fig. 3 nicht gezeigten - Verbrennungsmotor angetrieben wird. Das Sonnenrad 28 des Planetengetriebes ist mit der - in Fig. 3 ebenfalls nicht gezeigten - elektrischen Maschine verbunden.

Die in Fig. 3 nicht gezeigte Zapfwelle ist mit dem Planetenradträger 30 verbunden, wobei auf dem Planetenradträger 30 vorzugsweise jeweils drei Stufenplanetenzahnräder 32, 34 angeordnet sind, welche jeweils zwei Zahnräder mit unterschiedlichen Durchmessern aufweisen. Die Zahnräder 32 mit kleinerem Durchmesser kämmen mit dem Sonnenrad 28 und die Zahnräder 34 mit größerem Durchmesser kämmen mit dem Hohlrad 26.

Wenn die Durchmesser sich wie 27 zu 6 zu 9 zu 12 bezüglich des Hohlrads 26, der Zahnräder 32 kleineren Durchmessers, der Zahnräder 34 größeren Durchmessers und des Sonnenrads 28 verhalten, wird bei einer Drehzahl des Verbrennungsmotors 18 von + 2000 Umdrehungen pro Minute und bei eingerückter Bremse 24 und somit bei stillgesetzter Zapfwelle 14 die elektrische Maschine 12 mit einer Drehzahl von - 3000 Umdrehungen pro Minute angetrieben. Die elektrische Maschine 12 ist also gegenüber dem Verbrennungsmotor 18 ins Schnelle übersetzt, was sich günstig für eine Leistungsabgabe der elektrischen Maschine 12 auswirkt, wenn diese im Generatorbetrieb arbeitet.

Andererseits könnte bei einem Zapfwellenbetrieb, also bei nicht stillgesetzter Bremse 24, eine Zapfwellendrehzahl von 1000 Umdrehungen pro Minute gefordert sein. Bei einer Drehzahl des Verbrennungsmotors 18 von + 2000 Umdrehungen pro Minute ist eine abgegebene Drehzahl der motorisch betriebenen elektrischen Maschine 12 von - 500 Umdrehungen pro Minute erforderlich.

Die Übersetzung des Mischgetriebes 10 ist somit derart ausgelegt, dass die im Hauptarbeitsbereich der Zapfwelle 14 benötigten Drehzahlen im wirkungsgradoptimalen Drehzahlbereich des Verbrennungsmotors 18 liegen, und dass ein vergleichsweise kleiner Leistungsanteil der elektrischen Maschine 12 bereitzustellen ist.

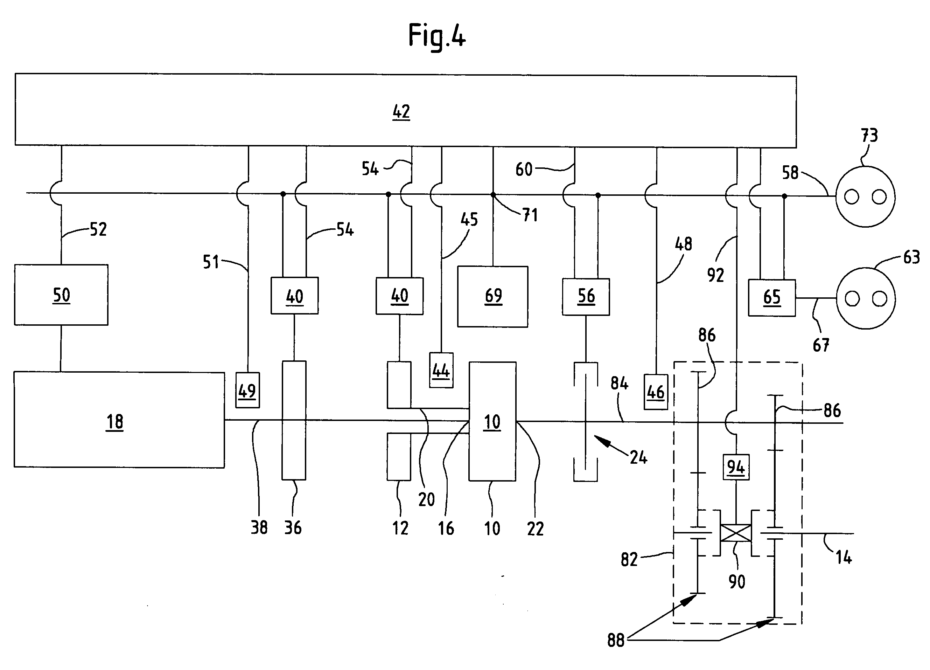

Fig. 4 zeigt eine Weiterbildung des ersten Ausführungsbeispiels gemäß Fig. 1, die eine schaltbare Stirnradstufe 82 aufweist. Zwischen der schaltbaren Stirnradstufe 82 und der dritten Getriebeschnittstelle 22 ist die Welle 84 vorgesehen, die das von der dritten Getriebeschnittstelle 22 zur Verfügung gestellte Drehmoment an die schaltbare Stirnradstufe 82 überträgt. Die schaltbare Stirnradstufe 82 umfasst zwei mit der Welle 84 verbundene Stirnräder 86, wobei das links eingezeichnete Stirnrad 86 einen verglichen zum rechts eingezeichneten Stirnrad 86 größeren Durchmesser aufweist. Die Stirnräder 86 kämmen jeweils ein schaltbares Stirnrad 88, wobei das links eingezeichnete Stirnrad 88 einen verglichen zum rechts eingezeichneten Stirnrad 88 kleineren Durchmesser aufweist. Die schaltbaren Stirnräder 88 können von einer Schalteinrichtung 90 entsprechend geschalten werden, so dass das von der Welle 84 übertragene Drehmoment entweder über die beiden links oder über die beiden rechts eingezeichneten Stirnräder 86, 88 auf die Zapfwelle 14 übertragen wird. Die Schalteinrichtung 90 wird von der Steuerung 42 über die Verbindungsleitung 92 von der Steuerung 94 angesteuert. Die schaltbare Stirnradstufe 82 aus Fig. 4 ist auch an die Zapfwelle 14 des zweiten Ausführungsbeispiels gemäß Fig. 2 entsprechend anschließbar.

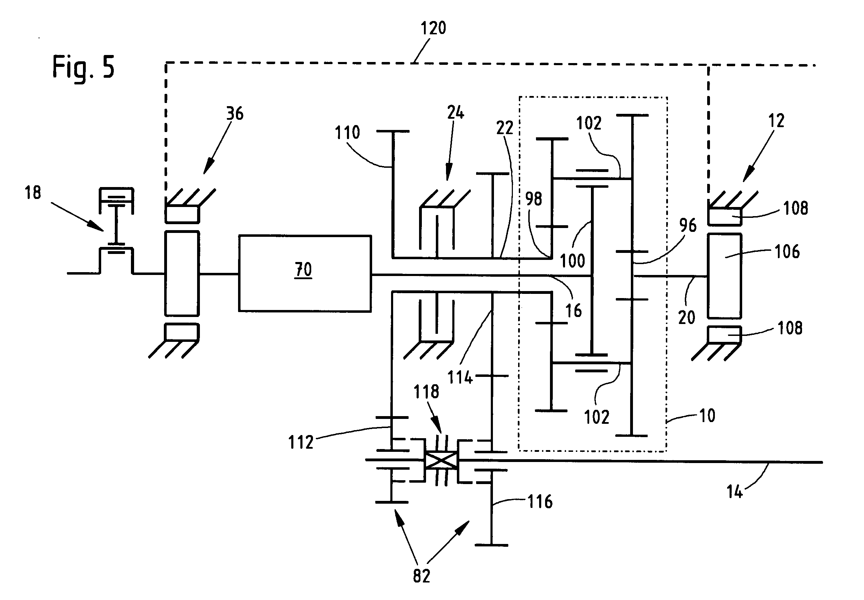

Fig. 5 zeigt in einer schematischen Darstellung eine Weiterbildung des Ausführungsbeispiels aus Fig. 4 bzw. eine detailiertere Ansicht des Mischgetriebes 10, welches in Form eines Plusgetriebes ausgeführt ist. Das Mischgetriebe 10 aus Fig. 5 weist zwei Sonnenräder 96, 98 und mehrere in einem Planetenträger 100 umlaufende Stufenplanetenräder 102 auf.

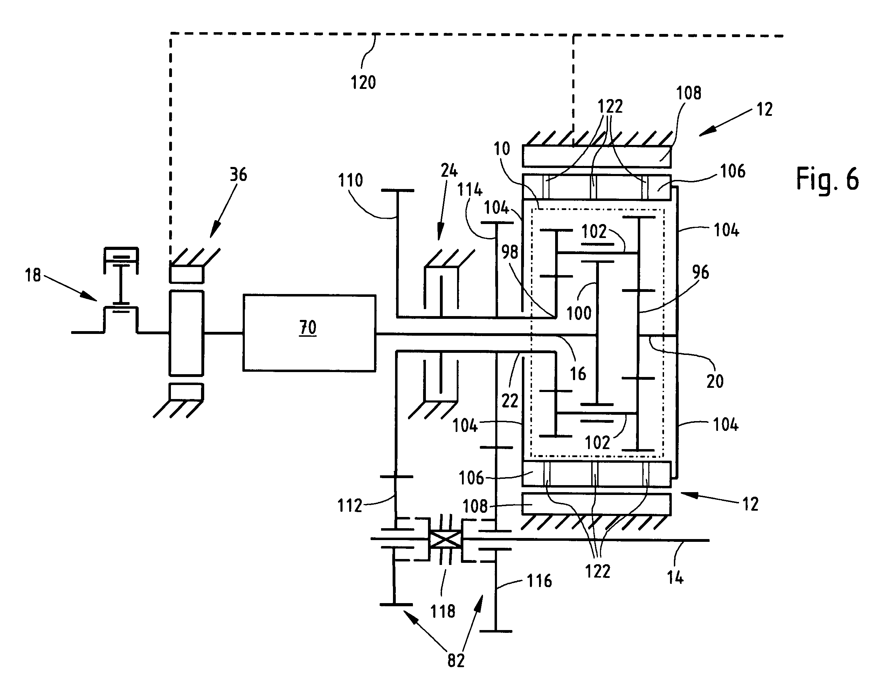

Der Läufer bzw. Rotor 106 der elektrischen Maschine 12 ist mit der in Form eines Sonnenrads 96 ausgeführten zweiten Getriebeschnittstelle 20 verbunden. Der Stator 108 der elektrischen Maschine 12 ist an einem - nicht gezeigten - Gehäuse angeordnet. Der Verbrennungsmotor 18 ist über das Getriebe 70 und über die Getriebeschnittstelle 16 mit dem Planetenträger 100 des Mischgetriebes 10 verbunden. Die Zapfwelle 14 steht mit der in Form einer Hohlwelle und dem zweiten Sonnenrad 98 ausgebildeten dritten Getriebeschnittstelle 22 in Verbindung, und zwar über die schaltbare Stirnradstufe 82. Die Stirnradstufe 82 umfasst die miteinander kämmenden Stirnräder 110, 112 sowie die miteinander kämmenden Stirnräder 114, 116. Mit der Schalteinrichtung 118 können entweder die Stirnräder 110, 112 mit der Zapfwelle 14 oder die Stirnräder 114, 116 mit der Zapfwelle 14 drehfest verbunden werden. Die Stirnräder 110, 114 sind drehfest mit der Hohlwelle unter somit mit dem zweiten Sonnenrad 98 verbunden. Bei der Schalteinrichtung 118 handelt es sich um eine formschlüssige Kupplung, welche elektromechanisch geschaltet wird. Lediglich schematisch sind mit dem Bezugszeichen 120 die Verbindungsleitungen zwischen den elektrischen Maschinen 12, 36 und der - in den Fig. 5 und 6 nicht gezeigten - Steuerung 42 angedeutet.

Fig. 6 zeigt ein erfindungsgemäßes Ausführungsbeispiel, mit einem zu dem aus Fig. 5 im Wesentlichen vergleichbaren Aufbau. Hier ist jedoch die elektrische Maschine 12 bzw. deren Rotor 106 in Form eines Hohlläufers ausgebildet. Das Mischgetriebe 10 ist in dem als Hohlläufer ausgebildeten Rotor 106 der elektrischen Maschine 12 angeordnet. Wie auch in Fig. 5 ist der Rotor 106 der elektrischen Maschine 12 aus Fig. 6 über die zweite Getriebeschnittstelle 20 mit dem Sonnenrad 96 verbunden. Durch die in Fig. 6 angedeutete Bauweise wird in ganz besonders vorteilhafter Weise der Bauraum optimal ausgenutzt, wobei die Antriebsvorrichtung kompakt ausgeführt ist.

Ganz besonders bevorzugt ist das Mischgetriebe 10 und die elektrische Maschine 12 gemeinsam in einem Gehäuse - in Fig. 6 nicht gezeigt - angeordnet. Zum Kühlen der elektrischen Maschine 12 wird zunächst dem Mischgetriebe 10 zur Schmierung Öl zugeführt. Das Öl gelangt über in Fig. 6 nicht gezeigte Verbindungsöffnungen in den Innenraum des Rotors 106 der elektrischen Maschine 12, wobei an dem Innenraum des Rotors 106 der elektrischen Maschine 12 seitlich angeordnete Scheiben 104 vorgesehen sind, welche ein Abfließen des Kühlmittels in axialer Richtung zumindest weitgehend verhindern.

Bei der Rotation des Rotors 106 der elektrischen Maschine 12 fließt aufgrund der Fliehkraft das nach außen geschleuderte Kühlmittel durch Durchgänge 122 nach außen. Die Durchgänge 122 erstrecken sich in radialer Richtung und können insbesondere Schlitze und/oder Bohrungen in dem Rotor aufweisen. Zur deutlicheren Darstellung sind in Fig. 6 weniger Durchgänge 122 eingezeichnet als tatsächlich vorgesehen sind und die Durchmesser der Bohrungen bzw. der Durchgänge 122 sind vergrößert gezeigt. Mit dem nach außen geflossenen Öl kann dann der Stator 108 der elektrischen Maschine 12 ebenfalls gekühlt werden. Die elektrische Maschine 12 der Fig. 5 und 6 weist jeweils eine Asynchronmaschine auf.

Auch wenn die Erfindung lediglich anhand zweier Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Antriebsvorrichtung zum Antreiben von Zusatzgeräten für ein Fahrzeug, insbesondere ein landwirtschaftliches Nutzfahrzeug, mit einem Mischgetriebe (10), wobei eine erste Getriebeschnittstelle (16) des Mischgetriebes (10) von einem Verbrennungsmotor (18) antreibbar ist und eine elektrische Maschine (12) mit einer zweiten Getriebeschnittstelle (20) des Mischgetriebes (10) in Verbindung steht, wobei eine Zapfwelle (14) mit einer dritten Getriebeschnittstelle (22) des Mischgetriebes (10) in Verbindung steht, **dadurch gekennzeichnet, dass** eine Bremse (24) vorgesehen ist, mit der die Zapfwelle (14) stillsetzbar ist, sodass bei stillgesetzter Zapfwelle (14) das vom Verbrennungsmotor (18) an die Getriebeschnittstelle (16) abgegebene Drehmoment über das Mischgetriebe (10) auf die elektrische Maschine (12) übertragen wird, die dann als Generator betrieben wird und elektrischen Strom erzeugt.

2. Antriebsvorrichtung nach Anspruch 1, **dadurch gekennzeichnet, dass** das Mischgetriebe (10) ein Umlaufgetriebe aufweist.

3. Antriebsvorrichtung nach einem der vorhergehenden Ansprüche, **dadurch gekennzeichnet, dass** eine weitere elektrische Maschine (36) vorgesehen ist, die mittelbar oder unmittelbar von einem Verbrennungsmotor (18) antreibbar ist, wobei vorzugsweise die elektrische Maschine (12) und/oder die weitere elektrische Maschine (36) als Generator betreibbar ist.

4. Antriebsvorrichtung nach einem der vorhergehenden Ansprüche, **dadurch gekennzeichnet, dass** die elektrische Maschine (12) und/oder die weitere elektrische Maschine (36) als Elektromotor betreibbar ist.

5. Antriebsvorrichtung nach einem der vorhergehenden Ansprüche, **dadurch gekennzeichnet, dass** der elektrischen Maschine (12) und/oder der weiteren elektrischen Maschine (36) jeweils ein Umrichter (40) zugeordnet ist, mit dem die jeweilige elektrische Maschine (12, 36) in beide Drehrichtungen und/oder Drehmomentrichtungen schaltbar ist.

6. Antriebsvorrichtung nach einem der vorhergehenden Ansprüche, **dadurch gekennzeichnet, dass** eine Steuerung (42) vorgesehen ist, die den Verbrennungsmotor (18), die elektrische Maschine (12), die weitere elektrische Maschine (36), mindestens einen Umrichter (40) und/oder die Bremse (24) ansteuert, und dass vorzugsweise Zustandsdaten des Verbrennungsmotors (18), der Zapfwelle (14), der elektrischen Maschine (12) und/oder der weiteren elektrischen Maschine (36) von der Steuerung (42) erfassbar sind.

7. Antriebsvorrichtung nach einem der vorhergehenden Ansprüche, **dadurch gekennzeichnet, dass** bei geöffneter Bremse (24) die elektrische Maschine (12), die weitere elektrische Maschine (36) und das Mischgetriebe (10) zu einem leistungsverzweigten stufenlosen Getriebe für die Zapfwelle (14) kombinierbar sind, dass vorzugsweise die weitere elektrische Maschine (36) als Generator betreibbar ist, und dass vorzugsweise die elektrische Maschine (12) als Elektromotor betreibbar ist.

8. Antriebsvorrichtung nach Anspruch 6 oder 7, **dadurch gekennzeichnet, dass** die Steuerung (42) die elektrische Maschine (12) und gegebenenfalls die weitere elektrische Maschine (36) derart ansteuert, dass wenigstens ein in der Steuerung (42) hinterlegtes vorgebbares Optimierungsziel erreichbar ist.

9. Antriebsvorrichtung nach einem der Ansprüche 6 bis 8 **dadurch gekennzeichnet, dass** die Steuerung (42) die elektrische Maschine (12) und/oder gegebenenfalls die weitere elektrische Maschine (36) derart ansteuert, dass Drehschwingungen in einem Zapfwellenstrang dämpfbar sind.

10. Antriebsvorrichtung nach einem der vorhergehenden Ansprüche, **dadurch gekennzeichnet, dass** die Übersetzung des Mischgetriebes (10) derart ausgelegt ist, dass die im Hauptarbeitsbereich der Zapfwelle (14) benötigten Drehzahlen im wirkungsgradoptimalen Drehzahlbereich des Verbrennungsmotors (18) liegen, und dass vorzugsweise ein minimaler Leistungsanteil der elektrischen Maschine (12) und/oder der weiteren elektrischen Maschine (36) bereitzustellen ist.

11. Antriebsvorrichtung nach einem der vorhergehenden Ansprüche, **dadurch gekennzeichnet, dass** das Drehmoment der Zapfwelle (14) anhand des von der elektrischen Maschine (12) erzeugten Drehmoments bestimmbar ist.

12. Antriebsvorrichtung nach einem der Ansprüche 2 bis 11, **dadurch gekennzeichnet, dass** die elektrische Maschine (12) und die weitere elektrische Maschine (36) räumlich nah beieinander angeordnet sind, und dass vorzugsweise beide elektrische Maschinen (12, 36) von einer Kühleinrichtung (62) kühlbar sind.

13. Antriebsvorrichtung nach einem der vorhergehenden Ansprüche, **dadurch gekennzeichnet, dass** die elektrische Maschine (12) und/oder die weitere elektrische Maschine (36) jeweils als Generator arbeitet und einen elektrischen Verbraucher versorgt, beispielsweise einen elektrischen Heizwiderstand oder einen an eine elektrische Schnittstelle (63) anschließbaren elektrischen Verbraucher.

14. Antriebsvorrichtung nach einem der vorhergehenden Ansprüche, **dadurch gekennzeichnet, dass** zwischen der Zapfwelle (14) und der dritten Getriebeschnittstelle (22) eine Stirnradstufe vorgesehen ist, die vorzugsweise schaltbar ausgeführt ist und zur Umschaltung zwischen zwei unterschiedlichen Drehzahlen der Zapfwelle (14) dient.

15. Antriebsvorrichtung nach einem der vorangegangenen Ansprüche, **dadurch gekennzeichnet, dass** das Mischgetriebe (10) ein Plusgetriebe aufweist, welches vorzugsweise zwei Sonnenräder (96, 98) und mehrere in einem Planetenträger (100) umlaufende Stufenplanetenräder (102) aufweist, wobei die elektrische Maschine (12) mit der in Form eines Sonnenrads (96) ausgeführten zweiten Getriebeschnittstelle (20) verbunden ist, wobei der Verbrennungsmotor (18) mit der Getriebeschnittstelle (16) verbindbar ist und wobei die Zapfwelle (14) mit der in Form eines zweiten Sonnenrads (98) ausgeführten dritten Getriebeschnittstelle (22) in Verbindung steht.

16. Antriebsvorrichtung nach einem der vorangegangenen Ansprüche, **dadurch gekennzeichnet, dass** die elektrische Maschine (12) im Inneren in Form eines Hohlläufers ausgebildet ist, und dass das Mischgetriebe (10) zumindest teilweise in der elektrischen Maschine (12) angeordnet ist.

17. Antriebsvorrichtung nach einem der vorangegangenen Ansprüche, **dadurch gekennzeichnet, dass** die elektrische Maschine (12) eine Asynchronmaschine aufweist.

18. Antriebsvorrichtung nach Anspruch 16 oder 17, **dadurch gekennzeichnet, dass** Kühlmittel zunächst dem Mischgetriebe (10) zur Schmierung zugeführt wird, welches in den Innenraum des Rotors (106) der elektrischen Maschine (12) gelangt, wobei vorzugsweise an dem Innenraum des Rotors (106) der elektrischen Maschine (12) Mittel vorgesehen sind, welche insbesondere seitlich angeordnete Scheiben (104) aufweisen, und welche ein Abfließen des Kühlmittels in axialer Richtung zumindest weitgehend verhindern.

19. Antriebsvorrichtung nach Anspruch 18, **dadurch gekennzeichnet, dass** zur Kühlung des Rotors (106) das bei Rotation des Rotors (106) der elektrischen Maschine (12) aufgrund der Fliehkraft nach außen geschleuderte Kühlmittel durch Durchgänge (122) nach außen fließt, wobei die Durchgänge (122) sich im Wesentlichen in radialer Richtung erstrecken und insbesondere Schlitze und/oder Bohrungen in den beiden Kurzschlussringen des Rotors (106) aufweisen, und dass vorzugsweise der Stator (108) der elektrischen Maschine (12) ebenfalls gekühlt werden kann.

20. Fahrzeug, insbesondere ein landwirtschaftliches oder ein industrielles Nutzfahrzeug, **gekennzeichnet durch** eine Antriebsvorrichtung nach einem der Ansprüche 1 bis 19, wobei vorzugsweise eine Drehzahlregelung der Zapfwelle (14) vorgesehen ist, die abhängig von der Fahrzeuggeschwindigkeit ist.

21. Fahrzeug nach Anspruch 20, **dadurch gekennzeichnet, dass** die elektrische Maschine (12) und/oder die weitere elektrische Maschine (36) zur Bremsung des Fahrzeugs, insbesondere zur Dauerbremsung, konfigurierbar ist.

22. Fahrzeug nach Anspruch 20 oder 21, **dadurch gekennzeichnet, dass** das Fahrzeug mindestens ein durch einen Elektromotor (64) angetriebenes Fahrzeugrad (66) aufweist, und dass die von der elektrischen Maschine (12) und/oder der weiteren elektrischen Maschine (36) erzeugte elektrische Energie den Elektromotor (64) des Fahrzeugrads (66) speist.

23. Fahrzeug nach einem der Ansprüche 20 bis 22, **dadurch gekennzeichnet, dass** während des reinen Fahrbetriebs des Fahrzeugs die Zapfwelle (14) mit der Bremse (24) stillgesetzt ist.

## Claims

1. Driving device for driving additional apparatus in a vehicle, in particular an agricultural utility vehicle, with a hybrid transmission (10), a first transmission interface (16) of the hybrid transmission (10) being driveable by an internal combustion engine (18), and an electric machine (12) being connected to a second transmission interface (20) of the hybrid transmission (10), a power take-off shaft (14) being connected to a third transmission interface (22) of the hybrid transmission (10), **characterized in that** a brake (24) is provided, by means of which the power take-off shaft (14) can be stopped, so that, with a power take-off shaft (14) stopped, the torque delivered to the transmission interface (16) by the internal combustion engine (18) is transferred via the hybrid transmission (10) to the electric machine (12) which is then operated as a generator and generates electrical current.

2. Driving device according to Claim 1, **characterized in that** the hybrid transmission (10) has an epicyclic transmission.

3. Driving device according to one of the preceding claims, **characterized in that** a further electric machine (36) is provided, which is driveable indirectly or directly by an internal combustion engine (18), preferably the electric machine (12) and/or the further electric machine (36) being operable as a generator.

4. Driving device according to one of the preceding claims, **characterized in that** the electric machine (12) and/or the further electric machine (36) can be operated as an electric motor.

5. Driving device according to one of the preceding claims, **characterized in that** the electric machine (12) and/or the further electric machine (36) are/is assigned in each case a converter (40) by means of which the respective electric machine (12, 36) can be switched to both directions of rotation and/or torque directions.

6. Driving device according to one of the preceding claims, **characterized in that** a control (42) is provided, which activates the internal combustion engine (18), the electric machine (12), the further electric machine (36), at least one converter (40) and/or the brake (24), and **in that** preferably state data of the internal combustion engine (18), power take-off shaft (14), electric machine (12) and/or further electric machine (36) can be acquired by the control (42).

7. Driving device according to one of the preceding claims, **characterized in that**, with the brake (24) open, the electric machine (12), the further electric machine (36) and the hybrid transmission (10) can be combined into power-split continuously variable transmission for the power take-off shaft (14), **in that** preferably the further electric machine (36) is operable as a generator, and **in that** preferably the electric machine (12) is operable as an electric motor.

8. Driving device according to Claim 6 or 7, **characterized in that** the control (42) activates the electric machine (12) and, if appropriate, the further electric machine (36) in such a way that at least one stipulatable optimization target stored in the control (42) can be achieved.

9. Driving device according to one of Claims 6 to 8, **characterized in that** the control (42) activates the electric machine (12) and/or, if appropriate, the further electric machine (36) in such a way that torsional vibrations in a power take-off shaft train can be damped.

10. Driving device according to one of the preceding claims, **characterized in that** the step-up ratio of the hybrid transmission (10) is designed in such a way that the rotational speeds required in the main working range for the power take-off shaft (14) lie in the optimal-efficiency rotational speed range of the internal combustion engine (18), and **in that** preferably a minimum power share of the electric machine (12) and/or of the further electric machine (36) has to be provided.

11. Driving device according to one of the preceding claims, **characterized in that** the torque of the power take-off shaft (14) can be determined by means of the torque generated by the electric machine (12).

12. Driving device according to one of Claims 2 to 11, **characterized in that** the electric machine (12) and the further electric machine (36) are arranged spatially near to one another, and **in that** preferably both electric machines (12, 36) can be cooled by one cooling device (62).

13. Driving device according to one of the preceding claims, **characterized in that** the electric machine (12) and/or the further electric machine (36) operates/operates in each case as a generator and supply/supplies an electrical consumer, for example an electrical heating resistor or an electrical consumer connectable to an electrical interface (63).

14. Driving device according to one of the preceding claims, **characterized in that**, between the power take-off shaft (14) and the third transmission interface (22), a spur wheel stage is provided, which is preferably designed to be switchable and which serves for changing over between two different rotational speeds of the power take-off shaft (14).

15. Driving device according to one of the preceding claims, **characterized in that** the hybrid transmission (10) has a plus transmission which preferably has two sun wheels (96, 98) and a plurality of multi-step planet wheels (102) which rotate in a planet carrier (100), the electric machine (12) being connected to the second transmission interface (20) designed in the form of a sun wheel (96), the internal combustion engine (18) being connectable to the transmission interface (16), and the power take-off shaft (14) being connected to the third transmission interface (22) designed in the form of a second sun wheel (98).

16. Driving device according to one of the preceding claims, **characterized in that** the electric machine (12) is designed inside in the form of a hollow rotor, and **in that** the hybrid transmission (10) is arranged at least partially in the electric machine (12).

17. Driving device according to one of the preceding claims, **characterized in that** the electric machine (12) has an asynchronous machine.

18. Driving device according to Claim 16 or 17, **characterized in that** coolant is first fed to the hybrid transmission (10) for lubrication purposes and passes into the inner space of the rotor (106) of the electric machine (12), there preferably being provided on the inner space of the rotor (106) of the electric machine (12) means which have, in particular, laterally arranged discs (104) and which at least largely prevent the coolant from flowing away in the axial direction.

19. Driving device according to Claim 18, **characterized in that**, for cooling the rotor (106), the coolant thrown outwards during the rotation of the rotor (106) of the electric machine (12) on account of the centrifugal force flows outwards through passages (122), the passages (122) extending essentially in the radial direction, and, in particular, having slots and/or bores in the two short-circuit rings of the rotor (106), and **in that** preferably the stator (108) of the electric machine (12) can likewise be cooled.

20. Vehicle, in particular an agricultural or industrial utility vehicle, **characterized by** a driving device according to one of Claims 1 to 19, rotational speed regulation of the power take-off shaft (14) preferably being provided, which is dependent upon the vehicle speed.

21. Vehicle according to Claim 20, **characterized in that** the electric machine (12) and/or the further electric machine (36) can be configured for braking the vehicle, in particular for sustained-action braking.

22. Vehicle according to Claim 20 or 21, **characterized in that** the vehicle has at least one vehicle wheel (66) driven by an electric motor (64), and **in that** the electrical energy generated by the electric machine (12) and/or the further electric machine (36) feeds the electric motor (64) of the vehicle wheel (66).

23. Vehicle according to one of Claims 20 to 22, **characterized in that**, during the straightforward driving mode of the vehicle, the power take-off shaft (14) is stopped by means of the brake (24).

## Revendications

1. Dispositif d'entraînement pour entraîner des équipements auxiliaires pour un véhicule, en particulier un véhicule utilitaire agricole, comprenant une transmission mixte (10), une première interface de transmission (16) de la transmission mixte (10) pouvant être entraînée par un moteur à combustion interne (18) et une machine électrique (12) étant en liaison avec une deuxième interface de transmission (20) de la transmission mixte (10), un arbre de prise de force (14) étant en liaison avec une troisième interface de transmission (22) de la transmission mixte (10), **caractérisé en ce qu'**il est prévu un frein (24) au moyen duquel l'arbre de prise de force (14) peut être immobilisé, de telle sorte que, lorsque l'arbre de prise de force (14) est immobilisé, le couple fourni par le moteur à combustion interne (18) à l'interface de transmission (16) puisse être transmis par l'intermédiaire de la transmission mixte (10) à la machine électrique (12) qui fonctionne alors comme un générateur et produit du courant électrique.

2. Dispositif d'entraînement selon la revendication 1, **caractérisé en ce que** la transmission mixte (10) comprend un engrenage épicycloïdal.

3. Dispositif d'entraînement selon l'une quelconque des revendications précédentes, **caractérisé en ce qu'**il est prévu une machine électrique supplémentaire (36) qui peut être entraînée directement ou indirectement par un moteur à combustion interne (18), la machine électrique (12) et/ou la machine électrique supplémentaire (36) pouvant de préférence fonctionner en tant que générateur.

4. Dispositif d'entraînement selon l'une quelconque des revendications précédentes, **caractérisé en ce que** la machine électrique (12) et/ou la machine électrique supplémentaire (36) peuvent fonctionner en tant que moteur électrique.

5. Dispositif d'entraînement selon l'une quelconque des revendications précédentes, **caractérisé en ce qu'**un convertisseur respectif (40) est associé à la machine électrique (12) et/ou la machine électrique supplémentaire (36), au moyen duquel convertisseur la machine électrique respective (12, 36) peut être commutée dans les deux sens de rotation et/ou les deux sens de couple.

6. Dispositif d'entraînement selon l'une quelconque des revendications précédentes, **caractérisé en ce qu'**il est prévu une commande (42) qui commande le moteur à combustion interne (18), la machine électrique (12), la machine électrique supplémentaire (36), au moins un convertisseur (40) et/ou le frein (24), et **en ce que** des données d'état du moteur à combustion interne (18), de l'arbre de prise de force (14), de la machine électrique (12) et/ou de la machine électrique supplémentaire (36) peuvent de préférence être collectées par la commande (42).

7. Dispositif d'entraînement selon l'une quelconque des revendications précédentes, **caractérisé en ce que**, lorsque le frein (24) est ouvert, la machine électrique (12), la machine électrique supplémentaire (36) et la transmission mixte (10) peuvent être combinées pour former une transmission à variation continue à dérivation de puissance pour l'arbre de prise de force (14), **en ce que** la machine électrique supplémentaire (36) peut de préférence fonctionner en tant que générateur et **en ce que** la machine électrique (12) peut de préférence fonctionner en tant que moteur électrique.

8. Dispositif d'entraînement selon la revendication 6 ou 7, **caractérisé en ce que** la commande (42) commande la machine électrique (12) et éventuellement la machine électrique supplémentaire (36) de telle sorte qu'au moins une cible d'optimisation prédéfinissable enregistrée dans la commande (42) puisse être atteinte.

9. Dispositif d'entraînement selon l'une quelconque des revendications 6 à 8, **caractérisé en ce que** la commande (42) commande la machine électrique (12) et/ou éventuellement la machine électrique supplémentaire (36) de telle sorte que des vibrations torsionnelles dans une ligne d'arbre de prise de force puissent être amorties.

10. Dispositif d'entraînement selon l'une quelconque des revendications précédentes, **caractérisé en ce que** le rapport de la transmission mixte (10) est conçu de telle sorte que les régimes nécessaires dans la plage de travail principale de l'arbre de prise de force (14) se situent dans la plage de régimes à rendement optimal du moteur à combustion interne (18) et **en ce qu'**une fraction de puissance minimale doit de préférence être fournie à la machine électrique (12) et/ou à la machine électrique supplémentaire (36).

11. Dispositif d'entraînement selon l'une quelconque des revendications précédentes, **caractérisé en ce que** le couple de l'arbre de prise de force (14) peut être déterminé à l'aide du couple produit par la machine électrique (12).

12. Dispositif d'entraînement selon l'une quelconque des revendications 2 à 11, **caractérisé en ce que** la machine électrique (12) et la machine électrique supplémentaire (36) sont disposées spatialement à proximité l'une de l'autre et **en ce que** les deux machines électriques (12, 36) peuvent de préférence être refroidies par un dispositif de refroidissement (62).

13. Dispositif d'entraînement selon l'une quelconque des revendications précédentes, **caractérisé en ce que** la machine électrique (12) et/ou la machine électrique supplémentaire (36) fonctionnent respectivement en tant que générateur et alimentent un consommateur électrique, par exemple une résistance chauffante électrique ou un consommateur électrique pouvant être raccordé à une interface électrique (63).

14. Dispositif d'entraînement selon l'une quelconque des revendications précédentes, **caractérisé en ce qu'**un étage à roue droite est prévu entre l'arbre de prise de force (14) et la troisième interface de transmission (22), lequel étage à roue droite est réalisé de préférence de manière commutable et sert à la commutation entre deux régimes différents de l'arbre de prise de force (14).

15. Dispositif d'entraînement selon l'une quelconque des revendications précédentes, **caractérisé en ce que** la transmission mixte (10) comprend un engrenage positif qui comprend de préférence deux roues solaires (96, 98) et plusieurs roues planétaires étagées (102) tournant dans un porte-satellites (100), la machine électrique (12) étant reliée à la deuxième interface de transmission (20) réalisée sous la forme d'une roue solaire (96), le moteur à combustion interne (18) pouvant être relié à l'interface de transmission (16) et l'arbre de prise de force (14) étant en liaison avec la troisième interface de transmission (22) réalisée sous la forme d'une deuxième roue solaire (98).

16. Dispositif d'entraînement selon l'une quelconque des revendications précédentes, **caractérisé en ce que** la machine électrique (12) est réalisée à l'intérieur sous la forme d'un induit creux et **en ce que** la transmission mixte (10) est disposée au moins partiellement dans la machine électrique (12).

17. Dispositif d'entraînement selon l'une quelconque des revendications précédentes, **caractérisé en ce que** la machine électrique (12) comprend une machine asynchrone.

18. Dispositif d'entraînement selon la revendication 16 ou 17, **caractérisé en ce que** du réfrigérant est tout d'abord acheminé jusqu'à la transmission mixte (10) pour la lubrification, lequel réfrigérant parvient jusqu'à l'espace intérieur du rotor (106) de la machine électrique (12), des moyens étant prévus de préférence sur l'espace intérieur du rotor (106) de la machine électrique (12), lesquels moyens comprennent des plaques (104) disposées en particulier latéralement et empêchent au moins dans une large mesure un écoulement du réfrigérant dans la direction axiale.

19. Dispositif d'entraînement selon la revendication 18, **caractérisé en ce que**, pour le refroidissement du rotor (106), le réfrigérant projeté vers l'extérieur en raison de la force centrifuge lors de la rotation du rotor (106) de la machine électrique (12) s'écoule vers l'extérieur par des passages (122), les passages (122) s'étendant essentiellement dans la direction radiale et comprenant en particulier des fentes et/ou des alésages dans les deux bagues de court-circuitage du rotor (106), et **en ce que** le stator (108) de la machine électrique (12) peut de préférence également être refroidi.

20. Véhicule, en particulier véhicule utilitaire agricole ou industriel, **caractérisé par** un dispositif d'entraînement selon l'une quelconque des revendications 1 à 19, une régulation du régime de l'arbre de prise de force (14) étant de préférence prévue, laquelle est dépendante de la vitesse du véhicule.

21. Véhicule selon la revendication 20, **caractérisé en ce que** la machine électrique (12) et/ou la machine électrique supplémentaire (36) peuvent être configurées pour le freinage du véhicule, en particulier pour le freinage continu.

22. Véhicule selon la revendication 20 ou 21, **caractérisé en ce que** le véhicule comprend au moins une roue de véhicule (66) entraînée par un moteur électrique (64), et **en ce que** l'énergie électrique produite par la machine électrique (12) et/ou la machine électrique supplémentaire (36) alimente le moteur électrique (64) de la roue de véhicule (66).

23. Véhicule selon l'une quelconque des revendications 20 à 22, **caractérisé en ce que**, pendant la conduite simple du véhicule, l'arbre de prise de force (14) est immobilisé au moyen du frein (24).
